# EUROPÄISCHE PATENTANMELDUNG

(11) **EP 1 166 933 A1**
(43) Veröffentlichungstag der Anmeldung: **02.01.2002**
(21) Anmeldenummer: 01114193.4
(22) Anmeldetag: 12.06.2001
(51) Int. Cl.: B23B 51/02

(54) **Bohrer mit Beschichtung**

(30) Priorität: 16.06.2000 DE 20010774 U
(71) Anmelder: Reca Norm GmbH & Co. KG, 74635 Kupferzell (DE)
(72) Erfinder: Rau, Wolfgang, 74636 Kupferzell (DE)
(74) Vertreter: Patentanwälte Ruff, Wilhelm, Beier, Dauster & Partner

(57) **Zusammenfassung**

Bei einem Bohrer, insbesondere einem pneumatischen Schlagbohrer, mit einem an einem Bohrwerkzeug festlegbaren Bohrschaft 19, einem Wendelabschnitt 14 und einem Bohrkopf 13 weist der Wendelabschnitt 14 mindestens vier Bohrwendeln 15, 16, 17, 18 auf. Mindestens die Flächen zwischen den Wendelgängen weisen eine Beschichtung 12 auf, die eine glatte Oberfläche aufweist, wobei die glatte Oberfläche der Beschichtung 12 als eine Art Gleitfläche wirkt.

## Beschreibung

### Anwendungsgebiet und Stand der Technik

Die Erfindung betrifft einen Bohrer, insbesondere einen pneumatischen Schlagbohrer, auch "Hammerbohrer" genannt, mit einem an einem Bohrwerkzeug festlegbaren Bohrschaft, einem Wendelabschnitt und einem Bohrkopf, wobei der Wendelabschnitt mindestens vier Bohrwendeln aufweist.

Bohrer gehören im allgemeinen zu den mit am meisten gebrauchten Werkzeugen im Handwerk oder bei Heimwerkern. Vor allem im Hinblick auf den Heimwerkerbedarf geht der Trend dazu, Universalbohrer zu entwickeln, mit denen eine Vielzahl verschiedener Materialien, beispielsweise Beton, Fliesen o.dgl. bearbeitet werden können. So ist beispielsweise ein Schwingungs-Dämpfungs-System bekannt, bei dem der Bohrer pneumatisch federnd an der Bohrmaschine gelagert ist und somit beim Bohren auftretende Schläge abfängt. Somit können auch noch sehr harte Materialien, wie beispielsweise Granit, bearbeitet werden.

Weiterhin ist bekannt Bohrer zu beschichten, um verbesserte Gleiteigenschaften zwischen Bohrer und der Lochwand der Bohrung zu schaffen und somit eine höhere Bohrleistung zu erreichen.

### Aufgabe und Lösung

Die Aufgabe der Erfindung ist es, einen Bohrer zu schaffen, der gegenüber herkömmlichen Bohrern weiter verbesserte Bohreigenschaften besitzt. Als Bohreigenschaften im Sinne der Anmeldung werden dabei die Bohrgeschwindigkeit, die Bohrgenauigkeit o.dgl. verstanden.

Diese Aufgabe wird durch einen Bohrer mit den Merkmalen des Anspruches 1 gelöst. Bevorzugte Ausführungen sind in den abhängigen Ansprüchen 2 bis 8 dargestellt.

Der erfindungsgemäße Bohrer zeichnet sich dadurch aus, daß mindestens die Fläche zwischen den Wendelgängen am Wendelabschnitt des Bohrers eine Beschichtung aufweist, die eine glatte Oberfläche besitzt. Die glatte Oberfläche der Beschichtung wirkt dabei als eine Art Gleitfläche.

Als Bohrer im Sinne der Anmeldung werden alle 4-spiraligen Bohrer, insbesondere Schlag- oder Hammerbohrer verstanden, die vorzugsweise pneumatisch federnd, beispielsweise mit einem Schwingungs-Dämpfungs-System (SDS) an der Bohrmaschine festgelegt sind.

Gerade die Kombination eines Bohrers mit vier Wendeln und einer Art Gleit-Coat-Beschichtung ergibt einen synergistischen Effekt. Die durch die Beschichtung besonders glatte Oberfläche läßt das Bohrmehl nicht mehr in der Wendel, insbesondere in den Zwischenräumen zwischen den Wendelgängen, kleben, sondern transportiert es kontinuierlich aus dem Bohrloch heraus. Es wird also im Vergleich zu herkömmlichen unbeschichteten Bohrern wesentlich mehr und wesentlich schneller Bohrmehl aus dem Bohrloch herausgefördert. Dieser Effekt tritt auch bei senkrecht nach unten geführten Bohrlöchern ein, bei denen der Bohrstaub infolge der Schwerkraft bestrebt ist, sich am Grund der Bohrung anzusammeln.

Ein weiterer Vorteil des erfindungsgemäßen Bohrers gegenüber herkömmlichen Bohrern ist die weiter verrringerte Wandreibung zwischen der Oberfläche des Wendelabschnitts und der Lochwandung. Während die unbeschichtete, nur mit Fett oder Öl geschmierte Wendeloberfläche einen hohen Reibungskoeffizienten aufweist und bei hohen Druckbelastungen zum Fressen neigt, zeichnet sich die erfindungsgemäße Beschichtung unter gleichen Bedingungen durch einen außerordentlich niedrigen Reibungskoeffizienten aus, der beispielsweise bei µ= ca. 0,04 liegt.

Durch die Kombination des 4-spiraligen Bohrers mit der Beschichtung kann eine deutlich höhere Bohrgeschwindigkeit gefahren und damit in gleicher Zeit deutlich mehr Löcher gebohrt werden. Durch den optimalen Bohrmehlabtransport wird verhindert, daß der Anwender manuell den Bohrer in die Bohrung Ein- und Ausfahren muß, um dadurch das Bohrmehl aus dem Bohrloch herauszubefördern.

Bei einer Weiterbildung der Erfindung ist die Beschichtung aus mindestens einer Schicht, vorzugsweise aus zwei Schichten aufgebaut. Dabei kann mindestens eine Grundschicht zur Haftung der Beschichtung am Bohrer vorgesehen sein. Die Grundschicht hat die Aufgabe auf unterschiedlichen Ausgangsmaterialien des Bohrers, beispielsweise Hartmetall oder Schnellarbeitsstahl, Haftung, Verschleiß- und Korrosionsschutz zu schaffen. Bevorzugt ist zusätzlich zur Grundschicht eine Deckschicht vorgesehen, die vorzugsweise auf die Grundschicht aufgetragen wird. Dabei wirkt die Deckschicht als eine Art Anti-Haft-Fläche beim Bohrmehlabtransport. Die Deckschicht kann eine Dispersionsschicht sein, die aus festen Schmierstoffen besteht, die in ein anorganisches oder organisches Bindersystem eingelagert sind. Als feste Schmierstoffe können beispielsweise Molybdänsulfid oder Graphit eingesetzt werden. Vorzugsweise wird jedoch Polytetrafluorethylen (PTFE) als Schmierstoff verwendet.

Bei einer Weiterbildung der Erfindung wird der gesamte Bohrwendelabschnitt, also nicht nur die Fläche zwischen den Wendelgängen, beschichtet. Damit wird verhindert, daß die Metalloberfläche des Bohrers mit der Lochwandung in Kontakt kommt und es dadurch zu einem Fressen des Bohrers kommt. Die Beschichtung ist dazu hitzebeständig, insbesondere bis +450°C, ausgebildet. Es ist aber auch der Einsatz der Beschichtung bei sehr tiefen Temperaturen, beispielsweise bei -150° bis -200°C, möglich. Besonders bevorzugt ist die Beschichtung nicht nur am Bohrwendelabschnitt sondern an der gesamten Bohreroberfläche, insbesondere auch am Bohrschaft angebracht. Bei pneumatisch gefederten Bohrern, insbesondere Hammerbohrern, ist es notwendig den Bohrschaft zu schmieren, um das Fressen des Bohrers auf Grund dessen Hubbewegung im Futter der Bohrmaschine zu verhindern. Die Beschichtung am Bohrschaft wirkt dabei als eine Art Trockenschmierung, die ein Nachfetten oder Nachschmieren des Bohrers nicht mehr notwendig macht.

Die Beschichtung wird vorzugsweise gleichmäßig, mit einer definierten Schichtstärke auf die Bohreroberfläche aufgebracht, beispielsweise kann durch Eintauchen des Bohrers in eine dementsprechende Lösung zunächst die Grundschicht und danach die Dispersions-Deckschicht ausgebildet werden. Bevorzugt wird die Beschichtung sehr dünn aufgetragen um dadurch noch ein exaktes Einspannen des Bohrschafts in das Bohrfutter der Bohrmaschine zu ermöglichen. Die Gesamt-Schichtdicke, also die Summe von Grund- und Deckschicht, liegt im Bereich von 5 µm bis 30 µm, insbesondere von 10 µm bis 20µm.

Bei einer Weiterbildung der Erfindung liegen die Außenflächen von zwei sich gegenüberliegenden Bohrwendeln auf dem vollen Bohrerdurchmesser und zentrieren den Bohrer in der Bohrung, während die anderen zwei sich gegenüberliegende Bohrwendeln demgegenüber einen verringerten Durchmesser aufweisen und die Funktion eines Bohrmehlauswerfers haben. Diese beiden Bohrwendeln befördern den Bohrstaub wie eine Art Förderschnecke aus der Bohrung. Die beiden Bohrwendel mit vollem Durchmesser können dabei schmale Rückenfasen, beispielsweise mit einem Bogenmaß von 20° bis 60°, insbesondere 30° bis 50°, bilden. Dabei kommt also beim Bohren nur ein sehr schmaler Bereich des Bohrers, nämlich die Rückenfasen der beiden Bohrwendeln mit vollem Durchmesser, mit der Lochwandung in Kontakt. Demzufolge ist die Wandreibung zwischen der Bohreroberfläche und der Lochwandung sehr gering. Der restliche Teil des Bohrers, insbesondere des Bohrwendelabschnittes, also eine weitaus größere Fläche dient zum Abtransport des Bohrstaubes aus dem Bohrloch.

Die bisher beschriebene Erfindung zeichnet sich also dadurch aus, daß durch die vier Bohrwendeln und die Beschichtung, insbesondere auf der gesamten Bohreroberfläche, der Bohrstaub optimal und sehr schnell, ohne in der Wendel zu kleben, aus dem Bohrloch heraustransportiert werden kann. Auf Grund der Beschichtung und der Ausbildung von sehr schmalen Rückenphasen besitzt der Bohrer eine sehr geringe Wandreibung mit der Bohrlochwandung, dies führt dazu, daß sehr schnell gebohrt werden kann. Die Beschichtung wirkt darüber hinaus noch als eine Art Trockenschmierung, die den Bohrschaft schmiert. Die Beschichtung bietet zudem Schutz gegen Verschleiß und Korrosion, ist hitzebeständig und unempfindlich gegen Schmutz, Feuchtigkeit und chemischen Einflüssen.

Die beschriebenen Merkmale und weitere Merkmale der Erfindung ergeben sich aus der nachfolgenden Beschreibung von bevorzugten Ausführungsformen in Verbindung mit den Unteransprüchen und der Zeichnung. Hierbei können die einzelnen Merkmale jeweils für sich allein oder zu mehreren in Kombination miteinander verwirklicht sein.

### Figurenbeschreibung

Ein Ausführungsbeispiel der Erfindung ist in den Zeichnungen dargestellt und wird im folgenden näher erläutert. In den Zeichnungen zeigen:
- Figur 1:: eine verkürzte Seitenansicht des Bohrers,
- Figur 2:: einen Querschnitt durch den Bohrer von Figur 1 in Richtung des Pfeiles II gesehen, und

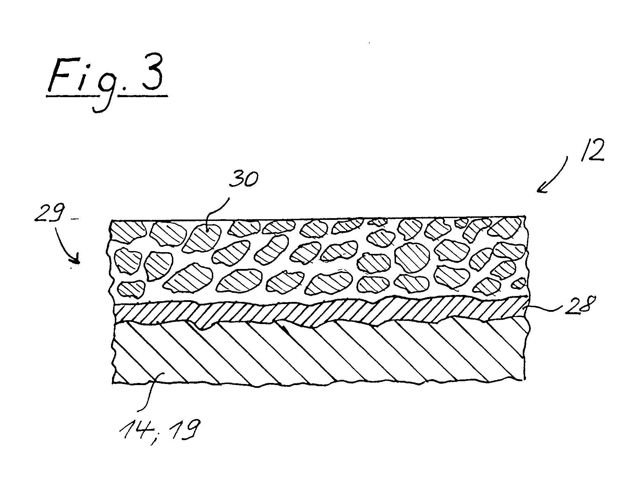

- Figur 3:: einen Schnitt durch die Beschichtung des Bohrers.

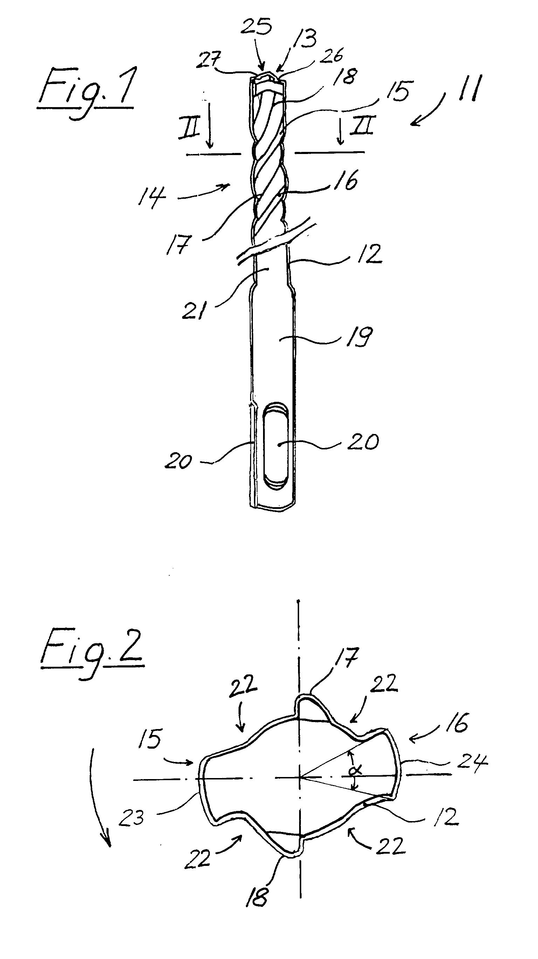

Figur 1 zeigt einen Bohrer 11 mit einer Beschichtung 12. Der Bohrer 11 ist ein Hammerbohrer mit Schwingungs-Dämpfungs-System (SDS). Der Bohrer 11 ist beispielsweise aus Automaten-oder Schnellarbeitsstahl hergestellt, und besitzt einen Bohrkopf 13, aus aufgesintertem Hartmetall. Der Bohrer 11 besitzt weiterhin einen Wendelabschnitt 14 mit vier Bohrwendeln 15, 16, 17, 18 und einem Bohrschaft 19.

Der Bohrschaft 19 erstreckt sich ca. auf ein Viertel der Länge des Bohrers 11. Er besitzt am Umfang zwei Nutpaare 20, die als eine Art pneumatischer Federweg des Schwingungs-Dämpfungs-System-Bohrers und zur Führung des Bohrers dienen.

An den Bohrschaft 19 schließt sich ein im Durchmesser verringerter Übergangsabschnitt 21 an, an den der Wendelabschnitt 14 anschließt.

Der Wendelabschnitt 14 besteht aus vier Bohrwendeln 15, 16, 17, 18, von denen zwei sich gegenüberliegende Bohrwendeln 15, 16 auf dem vollen Durchmesser des Wendelabschnittes 14 liegen. Die beiden anderen Bohrwendeln 17, 18 haben, wie in Figur 2 dargestellt, einen gegenüber dem Durchmesser des Wendelabschnittes verringerten Durchmesser. Die Bohrwendeln 15 bis 18 sind dabei so angeordnet, daß zwischen zwei Bohrwendeln 15, 16 mit vollem Durchmesser eine Bohrwendel 17 mit verringertem Durchmesser liegt. Zwischen den Gewindegängen der Bohrwendeln 15 bis 18 sind Bohrfurchen 22 ausgebildet, die zum Abtransport des Bohrmehls dienen. Die Wendelgänge der beiden Bohrwendeln mit vollem Durchmesser 15, 16 bilden jeweils eine Rückenfase 23, 24 deren Bogenmaß 45° beträgt. An den Wendelabschnitt 14 schließt ein Bohrkopf 13 an, dessen Spitze als eine Art Bügel über dem Wendelabschnitt 14 sitzt. Der Bohrkopf 13 besitzt eine Zentrierung 25 mit zwei ausgeprägten Kerben 26, 27.

Die Beschichtung 12 ist auf der gesamten Bohreroberfläche angebracht und ist in Figur 13 näher dargestellt. Die Beschichtung 12 besteht aus einer Grundschicht 28, die unmittelbar auf die Metalloberfläche des Bohrers aufgetragen ist. Auf die Grundschicht 28 ist eine Dispersionsschicht 29 aufgetragen. Die Dispersionsschicht 29 besteht aus festen Schmierstoffen 30 und einem Bindersystem 31, in dem die Schmierstoffe 30 eingelagert sind. Als fester Schmierstoff 30 wird im beschriebenen Ausführungsbeispiel Polytetrafluorethylen (PTFE) eingesetzt.

Beim Bohren wirkt die Beschichtung 12 in den Bohrfurchen 22 als eine Art Gleitfläche für den Bohrstaub, der dadurch schnell aus dem Bohrloch (nicht dargestellt) herausbefördert wird. Die Beschichtung 12 am Bohrschaft 19 wirkt als Trockenschmierung für den SDS-Hammerbohrer. Die Beschichtung 12 auf den Rückenfasen 23, 24 der beiden Bohrwendeln 15, 16 mit vollem Durchmesser wirkt als Gleitschicht zur Herabsetzung der Wandreibung zwischen Bohrer 11 und Lochwand.

Beim Bohren wirken die Wendeln 15, 16, 17, 18 des Bohrers 11 wie eine Art Förderschnecke. Dabei dienen die in Rotationsrichtung (Pfeilrichtung in Fig.2) liegenden vorderen steilen Flanken der Wendeln 15, 16, 17, 18 zum Transport des Bohrmehls, während die hinteren Flanken weniger steil abfallen.

## Patentansprüche

1. Bohrer, insbesondere pneumatischer Schlagbohrer, mit einem an einem Bohrwerkzeug festlegbaren Bohrschaft (19), einem Wendelabschnitt (14) und einem Bohrkopf (13), wobei der Wendelabschnitt (14) mindestens vier Bohrwendeln (15, 16, 17, 18) aufweist und wobei mindestens die Flächen zwischen den Wendelgängen eine Beschichtung (12) aufweisen, die eine glatte Oberfläche aufweist und wobei die glatte Oberfläche der Beschichtung (12) als eine Art Gleitfläche wirkt.

2. Bohrer nach Anspruch 1, **dadurch gekennzeichnet, daß** die Beschichtung (12) aus mindestens einer Schicht aufgebaut ist, wobei insbesondere mindestens eine Grundschicht (28) zur Haftung der Beschichtung (12) am Bohrer (11) und mindestens eine Deckschicht als Gleitfläche vorgesehen ist.

3. Bohrer nach Anspruch 2, **dadurch gekennzeichnet, daß** die Deckschicht eine Dispersionsschicht (29) ist, bei der feste Schmierstoffe (30), insbesondere Polytetrafluorethylen (PTFE), in ein organisches oder anorganisches Bindersystem (31) eingelagert sind.

4. Bohrer nach einem der vorhergehenden Ansprüche, **dadurch gekennzeichnet, daß** die Beschichtung (12) auf dem gesamten Bohrwendelabschnitt (14) angebracht ist.

5. Bohrer nach einem der vorhergehenden Ansprüche, **dadurch gekennzeichnet, daß** die Beschichtung (12) vorzugsweise gleichmäßig an der gesamten Bohreroberfläche, insbesondere auch am Bohrschaft (19), angebracht ist.

6. Bohrer nach einem der vorhergehenden Ansprüche, **dadurch gekennzeichnet, daß** die Gesamt-Schichtdicke der Beschichtung (12) im Bereich von 5 µm bis 30 µm, insbesondere 10 µm bis 20 µm, liegt.

7. Bohrer nach einem der vorhergehenden Ansprüche, **dadurch gekennzeichnet, daß** er zwei sich gegenüber liegende Bohrwendeln (15, 16) mit vollem Durchmesser aufweist, die den Bohrer (11) in der Bohrung zentrieren und zwei sich gegenüber liegende Bohrwendeln (17, 18) mit verringemdem Durchmesser aufweist, die die Funktion eines Bohrstaubauswerfers haben.

8. Bohrer nach Anspruch 7, **dadurch gekennzeichnet, daß** die zwei Bohrwendeln mit vollem Durchmesser (15, 16) jeweils eine Rückenfase (23, 24) bilden, deren Bogenmaß im Bereich von 20° bis 60°, insbesondere 30° bis 50° liegt.
